# EUROPEAN PATENT SPECIFICATION

(11) **EP 2 498 058 B1**
(45) Date of publication and mention of the grant of the patent: **20.12.2017**
(21) Application number: 12158394.2
(22) Date of filing: 07.03.2012
(51) Int. Cl.: G01C 21/32

(54) **Navigation apparatus**
Navigationsvorrichtung
Appareil de navigation

(30) Priority: 09.03.2011 JP 2011051768
(43) Date of publication of application: 12.09.2012
(73) Proprietor: DENSO CORPORATION, Kariya-city, Aichi-pref., 448-8661 (JP)
(72) Inventor: NAKAMURA, Shuuji, Kariya-city, Aichi-pref., 448-8661 (JP)
(74) Representative: Winter, Brandl, Fürniss, Hübner, Röss, Kaiser, Polte - Partnerschaft mbB

(56) References cited:
- EP-A1- 1 939 589
- EP-A2- 0 921 509
- JP-A- 2006 242 754

## Description

The present disclosure relates to a navigation apparatus, which performs route guidance based on map data while by utilizing learned road data obtained based on vehicle running experience.

Conventionally, when a new road is added to map data utilized in a navigation apparatus, a map maker performs addition-editing on road data with map editing software, and performs entire update or differential update on the map data used in the navigation apparatus based on the edited data. However, above-described process is realized by collecting road data by running with a specialized measurement vehicle of the map maker, thereafter generating map data in several months and delivering the data to users. As described above, since road data collection by running and generation of map data takes much time, it is difficult to maintain information freshness of the existing map data with respect to local change of roads in real world.

Accordingly, there is proposed a navigation apparatus that learns a new road unregistered in existing map data based on a traveling locus of a movable body such as a vehicle, as disclosed in JP H6-88733 A, JP 2006-125883 A, and JP 2006-242754 A.

Road learning function is a function of learning a new road unregistered in map data by generating and storing a new road (learned road) not existing in ready-made map data based on a traveling locus from a point where the current position of the movable body withdraws from an existing road in the map data to a point where the movable body returns to the existing road in the map data.

In a conventional navigation apparatus, partial map update is performed by (i) converting road data of an unregistered road newly detected with the above-described road learning function to road data having the same data format as the data format of the existing map data, and (ii) adding the converted road data to the existing map data. When the road data of the unregistered road is newly added to map data, which needs such a partial map update as a premise, it is necessary to ensure consistency of road network in the map data changed from the original map data.

It is an object of the present disclosure to provide a navigation apparatus which adds and uses data of a new road, which is detected by road learning function, as map data without changing original map data of the navigation apparatus.

To achieve the above object, according to an aspect of the present disclosure, a navigation apparatus as defined in claim 1 is provided.

The navigation apparatus includes a ready-made road data storage portion, a learned road data storage portion, a learned road detection section, an auxiliary link data generation section and a recording section. The ready-made road data storage portion stores road data of existing roads in a ready-made map, the road data of the existing roads is used in route guidance. The learned road data storage portion stores road data of a learned road, and auxiliary link data connecting a link of the learned road and a link of an existing road, the road data of the learned road and the auxiliary link data is used in route guidance. The learned road detection section detects a detected learned road based on a traveling locus from a withdrawal-point where a running position of the vehicle withdraws from an existing road stored in the ready-made road data storage portion to a return-point where the running position of the vehicle returns to an existing road stored in the ready-made road data storage portion. The learned road detection section generates road data related to a link of the detected learned road and end nodes of the link of the detected learned road. The auxiliary link data generation section generates auxiliary link data based on road data of a base link that is defined as a link of the existing road connected with the detected learned road. The auxiliary link data relates to an auxiliary link, which connects one end of the base link and a connection point between the existing road and the detected learned road, and auxiliary end nodes of the auxiliary link. The auxiliary link data also relates to an other auxiliary link, which connects an other end of the base link and the connection point between the existing road and the detected learned road, and auxiliary end nodes of the other auxiliary link. The recording section records (i) the road data of the detected learned road generated by the learned road detection section and (ii) the auxiliary link data generated with respect to the detected learned road by the auxiliary link data generation section in the learned road data storage portion.

Under such a configuration, when recording of learned road data obtained by running on a road unregistered in the existing map, the navigation apparatus of the present disclosure generates auxiliary link data indicates links connecting a connection point, where the learned road and the existing road are connected, with the end nodes of the corresponding link of the existing road connectd with the learned road, and records the learned road data and the auxiliary link data together in association with each other. At this time, the road data in the map data initially existed in the navigation apparatus is not changed.

The auxiliary link data is generated based on road data of the existing road, which is connected with the learned road. The existing road has withdrawal-point and return-point when the road learning is performed. The auxiliary link data defines a connection status between the learned road and the existing road, as a substitute of the base road data of the existing road. In a navigation apparatus using map data not on the presumption of partial map update, new learned road data detected by the road learning function can be added and used as map data with use of the auxiliary link data without changing the map data initially provided in the navigation apparatus. More specifically, when the navigation apparatus executes route guidance, road data stored in the ready-made road data storage portion, and road data stored in the learned road data storage portion, and auxiliary link data are respectively read, and utilized as one map data where the consistency of connection between the learned road and the existing road is ensured with the auxiliary links. Thus, the data of a new road, which is detected by the road learning function, can be used as map data without changing original map data of the navigation apparatus.

According to another aspect of the present disclosure, a program product, which is stored in a non-transitory computer readable storage medium, comprising instructions for execution by a computer as defined in claim 8 is provided. The instructions include a computer-implemented method for a navigation apparatus providing route guidance to a vehicle using road data indicating links and end nodes of the links relative to roads. The navigation apparatus includes (i) a ready-made road data storage portion in which existing road data relative to existing roads on a ready-made map is stored and (ii) a learned road data storage portion in which road data relative to learned roads is stored. The instructions are for implementing a step of detecting a new learned road, which is not stored in the ready-made road data storage portion, based on a traveling locus from a withdrawal-point where a running position of the vehicle withdraws from a withdrawal existing link of a withdrawal existing road stored in the ready-made road data storage portion to a return-point where the running position of the vehicle returns to a return existing link of a return existing road stored in the ready-made road data storage portion, a step of generating learned road data of the new learned road, a step of defining each of the withdrawal existing link and the return existing link as a base link while defining each of the withdrawal-point and the return-point as a connection point, a step of generating, based on road data relative to the base link stored in the ready-made road data storage portion, auxiliary link data with respect to each connection point of the base link, a step of recording, with respect to the new learned road, the learned road data and the auxiliary link data in association with each other in the learned road data storage portion. The learned road data indicates (i) a learned link of the new learned road and (ii) first and second learned end nodes of the learned link of the new learned road. The auxiliary link data indicates (i) a first auxiliary link, which connects the each connection point with one of two end nodes of the base link, and two auxiliary end nodes of the first auxiliary link and (ii) a second auxiliary link, which connects the each connection point with an other of the two end nodes of the base link, and two auxiliary end nodes of the second auxiliary link.

Similarly, under the above configuration of the another aspect, new learned road data detected by the road learning function can be added and used as one map data where the consistency of connection between the learned road and the existing road is ensured with the auxiliary links. Thus, the data of a new road, which is detected by the road learning function, can be used as map data without changing original map data of the navigation apparatus.

The above and other objects, features, and advantages of the present disclosure will become more apparent from the following detailed description made with reference to the accompanying drawings. In the drawings:
FIG. 1 is a block diagram showing a schematic configuration of a navigation apparatus according to an embodiment;
FIG. 2 is a flowchart showing main processing of road learning;
FIG. 3 is a schematic diagram showing auxiliary link generation;
FIG. 4 is a flowchart showing auxiliary link data generation processing;
FIG. 5 is a schematic diagram showing an example of auxiliary link generation;
FIG. 6 is a schematic diagram showing another example of auxiliary link generation;
FIG. 7 is a schematic diagram showing another example of auxiliary link generation;
FIG. 8 is a schematic diagram showing another example of auxiliary link generation;
FIG. 9 is a schematic diagram showing examples of an updated map; and
FIG. 10 is a schematic diagram showing another example of the updated map.

An embodiment of the present disclosure will be described with reference to the drawings. Note that the present disclosure is not limited to the following embodiments, but can be implemented in various aspects.

### [Explanation of Configuration of Navigation apparatus 1]

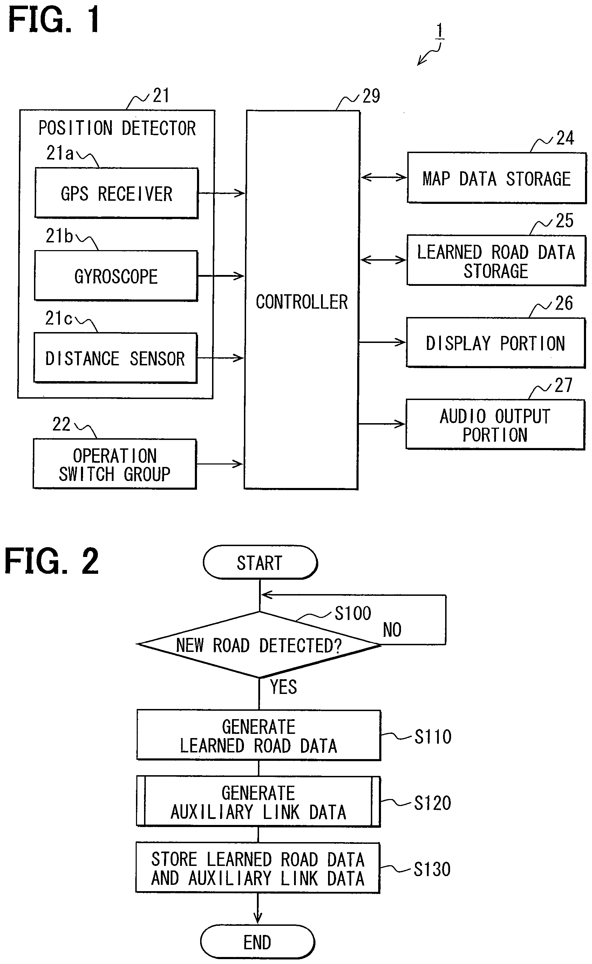

A navigation apparatus 1 according to the present embodiment is a navigation system installed in a subject vehicle. As shown in FIG. 1, the navigation apparatus 1 has a position detector 21 to detect a vehicle current position of the vehicle, an operation switch group 22 to input various instructions from a user, a map data storage portion 24, a learned road data storage portion 25, a display portion 26 to display map and various information, an audio output portion 27 to output various guide audio messages, and a controller 29.

The position detector 21 has a GPS receiver 21a to receive a signal transmitted from a Global Positioning System (GPS) satellite and detect positional coordinates and altitude of the vehicle, a gyroscope 21b to output a detection signal corresponding to an angular velocity of rotary motion applied to the vehicle, and a distance sensor 21c to output a mileage of the vehicle. The controller 29 calculates a current position, a direction, a speed and the like based on the output signals from respective sensors 21a to 21c. Various methods can be available to obtain the current position based on the output signal from the GPS receiver 21a. For example, independent positioning or relative positioning may be used to obtain the current position of the vehicle.

The operation switch group 22 includes a touch panel integrally set on a display screen of the display portion 26 and mechanical key switches provided around the display portion 26 and the like.

The map data storage portion 24 is a device to store ready-made map data provided from a map data provider for users, and to input the various data into the controller 29. The data stored in the map data storage portion 24 includes road data indicating road connection statuses with nodes corresponding to particular points such as an intersection and a link connected with the nodes (i.e., two consecutive nodes are positioned at both ends of a link; thus, the nodes are referred to as "end nodes" of the link), map data having drawing data necessary for map image display and the like, so-called map matching data, route guidance data, designed image data, and the like. As a storage medium used as the map data storage portion 24, an optical disc storage medium such as a CD/DVD-ROM, an electrically or magnetically rewritable storage medium (e.g., a hard disk or a flash memory) or the like may be used.

The learned road data storage portion 25 is a device to store data related to learned roads (also referred to as learned road data) obtained with a road learning function, and to input the various data into the controller 29. In the navigation apparatus 1 according to the present embodiment, when a new road, which is not existing in roads existing in the ready-made map data or in registered learned roads, is detected with the road learning function, the learned road data and auxiliary link data, which will be described below, related to the detected road are generated, and are recorded in the learned road data storage portion 25.

The learned road data includes attribute data and shape data related to a link of the detected learned road (also referred to as a learned road link) and nodes of the detected learned road (also referred to as learned road node). The auxiliary link data is data related to auxiliary links and auxiliary nodes at ends (also referred to as auxiliary end nodes) of the auxiliary links. The auxiliary links and the auxiliary nodes define a connection status of a learned road and an existing road in an auxiliary way. The auxiliary link data is used in navigation-related processing as a substitute for road data related to the existing road connected with the corresponding learned road. Therefore, the auxiliary link data has a role of logically connecting the learned road with the road in the ready-made map data and supplementing consistency of the map including the learned road without partially updating the ready-made map data. As a storage medium used as the learned road data storage portion 25, an electrically or magnetically rewritable storage medium (e.g., a hard disk or a flash memory) may be used. According to the invention, the learned road data storage portion is different from the ready-made road data storage portion. The display portion 26 is, for example, a color display device having a display screen such as a liquid crystal display. The display portion 26 can display various images depending on an input of video signal from the controller 29. The display portion 26 is used for display of a map image, a guide route from a departure point to a goal point, a mark indicating a current position of the vehicle, other guidance information and the like. The audio output portion 27 notifies various kinds of information to the user with audio messages. With above-described configuration, various kinds of route guidance such as direction guidance can be provided to the user with both the display on the display portion 26 and the audio message output from the audio output portion 27.

The controller 29 mainly includes a microcomputer. As well-known, the microcomputer includes a CPU, a ROM, a RAM, an I/O and a bus line connecting above-described constituent elements and controls the constituent elements. The controller 29 executes various processing based on instructions and data read from the ROM, the map data storage portion 24, the learned road data storage portion 25 and the like.

### [Outline of Operation]

The processing executed by the controller 29 will be described. Navigation-related processing includes map display processing and route guidance processing and the like. In the map display processing, first, the current position of the vehicle is calculated based on a detection signal from the position detector 21. Then, a map image is generated based on map data around the current position read from the map data storage portion 24 and the learned road data storage portion 25. The map image around the current position is displayed on the display portion 26. Further, the controller 29 superimposes a mark indicating the current position detected based on the detection signal from the position detector 21 on the map image displayed on the display portion 26. The controller 29 moves the current position mark, and scrolls the map image in accordance with movement of the vehicle.

In the route guidance processing, in response to setting a goal point with the operation switch group 22 by the user, the controller 29 searches for an optimum route from a departure point, which is the current position of the vehicle, to the goal point. When searching for the optimum route, the road data read from the map data storage portion 24 and the learned road data storage portion 25 are used. Then, with the optimum route obtained by the route search as a guide route, the controller 29 superimposes the guide route on the map image and displays the image on the display portion 26. Then the controller 29 displays or audio-outputs guide information at predetermined time in accordance with movement of the vehicle so that the vehicle can run along the guide route to the goal point.

The navigation apparatus 1 according to the present embodiment further has a road learning function. Specifically, when the vehicle runs in a region, which includes a road other than the registered ready-made map data or the registered learned road, the controller 29 generates the learned road data and the auxiliary link data related to the new road based on the traveling locus run by the vehicle, and registers the generated data in the learned road data storage portion 25. The controller 29 reads each of the road data stored in the map data storage portion 24, the learned road data and the auxiliary link data registered in the learned road data storage portion 25. Then, the controller 29 processes each of the data so as to ensure the consistency of the data as one map data, and utilizes the data in the map display processing and route guidance processing.

### [Explanation of Main Processing in Road Learning]

A main procedure of the road learning processing will be described below with reference to FIG. 2. The road learning processing is executed by the controller 29 and is a characteristic processing of the present disclosure. The main processing is executed during running of the vehicle.

It is noted that a flowchart or the processing of the flowchart in the present application includes sections (also referred to as steps), each of which is represented, for instance, as S100. Further, each section can be divided into several sub-sections while several sections can be combined into a single section. Furthermore, each of thus configured sections can be also referred to as a device, module, or means.

The controller 29 determines whether a new road, which is not existed in the map data storage portion 24 and the learned road data storage portion 25, is detected at S100 when the road learning processing starts. The current position is periodically specified with the position detector 21 during running of the vehicle. A new road is detected by obtaining a traveling locus from a withdrawal-point of the vehicle from a range of the existing road, which is one of the roads existing in the ready-made map data or the registered learned road, to a return-point of the vehicle to the existing road. The withdrawal-point is where a running position of the vehicle withdraws from the existing road registered in the ready-made map data or the registered learned road. The return-point is where the running position of the vehicle returns again to the existing road registered in the ready-made map data or the registered learned road.

When a new road has been detected, that is a determination result at S100 is "YES", the learned road data is generated at S110 based on the traveling locus from the withdrawal-point to the return-point of the existing road. The learned road data has information indicating the connection status of the road and a set of coordinate points indicating road shape between the withdrawal-point and the return-point and the like. The information indicating the connection status includes a learned road link, which is between connection points (the withdrawal-point and the return-point) to the existing road, and learned road nodes, which are the connection points to the existing road at ends of the learned road link.

Next, auxiliary link data corresponding to the learned road data generated at S110 is generated at S120. The auxiliary link data is generated based on data copied from link data at the withdrawal-point of the existing road, and link data at the return-point of the existing road. Hereafter, a link of the existing road, which is used as base data in generating of the auxiliary link data, will be also referred to as a "base link". Road data related to the base link and link end nodes of the base link is referred to as base road data.

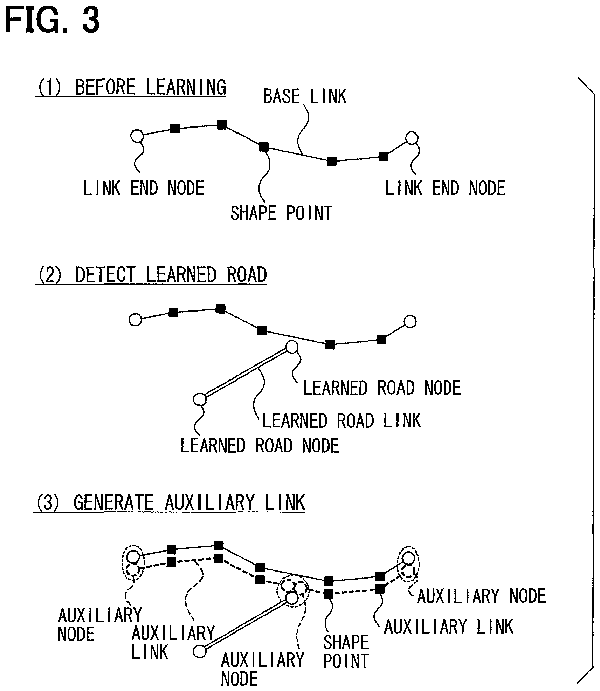

A method of generating the auxiliary link data will be described with reference to FIG. 3. In (1) of FIG. 3, a base link and base link end nodes of an existing road before road learning are shown. The base link includes several shape points indicating road shape with a set of coordinate values. Base link data of the base link and base link end node data of the base link end nodes include attribute information indicating road type, road scale, and connection destination of the road and the like. Herein, road data of the base link may be defined to contain the base link data and the base link end node data of the two base link end nodes.

In (2) of FIG. 3, a case where a learned road connected with a midpoint of the base link shown in (1) of FIG. 3 is detected is shown. As shown in (2) of FIG. 3, when the learned road is newly detected, learned road data is generated. The learned road data includes a learned road link along the running locus, a learned road node at one end of the learned road link and the other learned road node at the other end of the learned road link. The two learned road nodes respectively correspond to the connection points that are the withdrawal-point and the return-point to the base link.

As shown in (3) of FIG. 3, auxiliary link data corresponding to the generated learned road link is generated based on the base link data and base link end node data after the learned road data is generated. The auxiliary link data is generated by copying the base link data and the base link end node data. When generating the auxiliary link data, the base link is divided at a connection point to the learned road link, the connecting position corresponds to the learned road node.

As a result, as shown in (3) of FIG. 3, two sub-sets of auxiliary link data are generated. Each sub-set of the auxiliary link data has an auxiliary node corresponding to one base link end node, an auxiliary node corresponding to the learned road node at the connection point between the base link and the learned road link, and an auxiliary link connecting the two auxiliary nodes. In other words, the auxiliary link data are generated to indicate (i) a first auxiliary link, which connects each connection point with one of two end nodes of the base link, and two auxiliary end nodes of the first auxiliary link (corresponding to one of the two end nodes of the base link and the learned road node at the connection point between the base link and the learned road link), and (ii) a second auxiliary link, which connects the connection point with the other of the two end nodes of the base link, and two auxiliary end nodes of the second auxiliary link (corresponding to the other of the two end nodes of the base link and the same learned road node at the connection point between the base link and the learned road link).

The auxiliary link (i.e., the first or second auxiliary link) has attribute information and shape information, which are excerpted from the attribute information and the shape information of the base link. Similarly, the auxiliary node corresponding to each end node of the base link has attribute information and shape information, which are excerpted from the attribute information and the shape information of the base link end node. The auxiliary node further includes link information indicating linkage to a corresponding node, which is at a same position and may be one of the base link end node, the learned road node and another auxiliary node, in the attribute information. The link information of the auxiliary node is shown with a broken-line ellipse in (3) of FIG. 3.

The generation method of the auxiliary link data shown in (1) of FIG. 3 to (3) of FIG. 3 is a most basic example of the generation method. In the navigation apparatus 1 according to the present embodiment, other methods of generating the auxiliary link data depending on connection status between the learned road and the existing road will be described below.

The flowchart shown in FIG. 2 will be continuously described. At S130, the learned road data generated at S110 and the auxiliary link data generated at S120 are stored or recorded (also "registered" is equivalently used) together in association with each other in a predetermined storage area in the learned road data storage portion 25. After storing the data, the road learning processing ends.

### [Explanation of Processing to Generate Auxiliary Link Data]

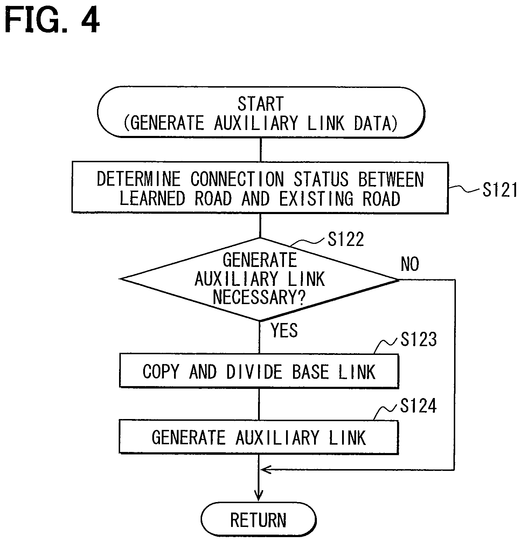

Next, with reference to the flowchart shown in FIG. 4, processing of auxiliary link data generation executed at S120 of the road learning processing by the controller 29 will be described.

When the processing of the auxiliary link data generation starts, at S121, the controller 29 determines the connection status between the learned road link in the learned road data generated at S110 and the link of the existing road connected with the learned road. More specifically, it is determined whether link end of the learned road is directly connected with link end of the existing road; whether the learned road link withdraws from an existing road link and returns to the same existing road link; whether another auxiliary link generated with the existing road link connected with the learned road as the base link exists; and whether the existing road connected with the learned road is a road registered in the ready-made map data or a learned road registered in a previous road learning.

Next, whether an auxiliary link corresponding to the detected learned road is necessary to be generated is determined at S122 depending on a determination result at S121. When the determination result at S121 corresponds to a case where the auxiliary link is necessary to be generated, that is, the determination result at S122 is "YES", the processing proceeds to S123. When the determination result at S121 corresponds to a case where the auxiliary link is not necessary to be generated, that is, the determination result at S122 is "NO", the processing ends.

When the processing proceeds to S123 in the case where the auxiliary link is necessary to be generated, the base link data and the base link end node data are copied as a base of the auxiliary link data to be generated at S123. Further, the copied base link is divided at the connection point to the learned road link at S123. Then, at S124, the auxiliary link data having the auxiliary links generated from the divided base links and auxiliary nodes generated from the copied base link end nodes is generated. After the generation of the auxiliary link data, the processing of the auxiliary link data generation ends.

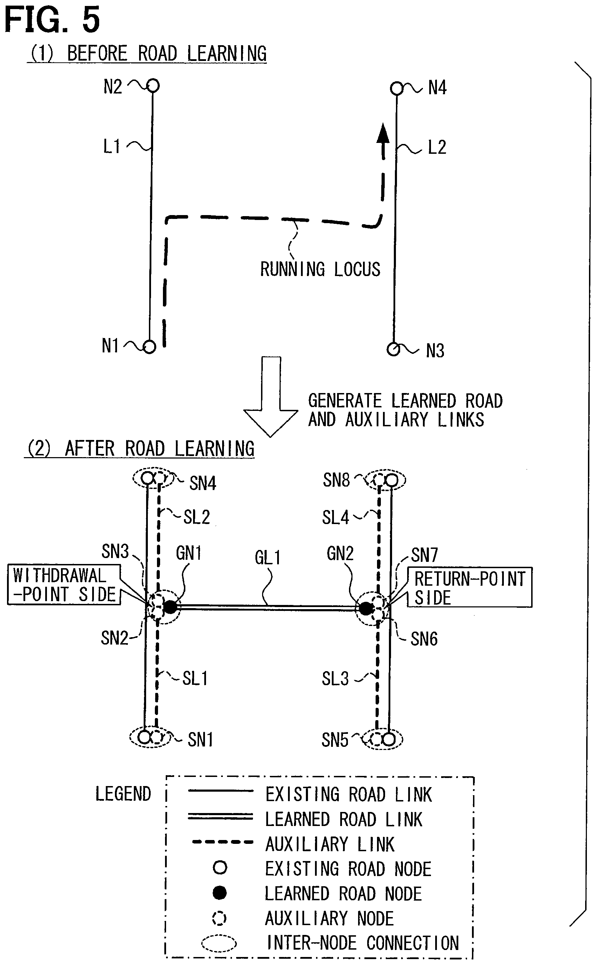

Next, examples of generating the auxiliary link data according to connection status between the learned road and the existing road will be described with reference to FIG. 5 to FIG. 8.

FIG. 5 is a diagram showing an example of generating an auxiliary link data corresponding to a learned road, which withdraws from an existing road registered in the ready-made map data and returns to another existing road. In this example, as shown in (1) of FIG. 5, a running locus withdraws from a midpoint (withdrawal-point) of an existing road link L1 in the ready-made map data and returns to a midpoint (return-point) of another existing road link L2 in the ready-made map data. In (1) of FIG. 5, road connection status before road learning is performed is shown, and in (2) of FIG. 5 road connection status after road learning is performed is shown, that is when the learned road and the auxiliary link is generated.

As shown in (2) of FIG. 5, learned road data including a learned road link GL1, a learned road node GN1 as a link end node on the withdrawal-point side and a learned road node GN2 as a link end node on the return-point side is generated based on the running locus.

Next, as shown in (2) of FIG. 5, auxiliary link data having an auxiliary link SL1 and auxiliary nodes SN1 and SN2 at two ends of the auxiliary link SL1 is generated on the withdrawal-point side. Specifically, the auxiliary link SL1 is generated based on the existing road link L1, the auxiliary node SN1 is generated based on an existing road node N1 and the auxiliary node SN2 is generated based on the learned road node GN1. Similarly, auxiliary link data having an auxiliary link SL2 and auxiliary nodes SN3 and SN4 at two ends of the auxiliary link SL2 is generated on the withdrawal-point side. Specifically, the auxiliary link SL2 is generated based on the existing road link L2, the auxiliary node SN3 is generated based on the learned road node GN1 and the auxiliary node SN4 is generated based on an existing road node N2. The existing road nodes N1 and N2 are at two ends of the existing road link L1. The auxiliary links SL1 and SL2 correspond to links obtained by dividing the existing road link L1 as the base link at the withdrawal-point.

On the other hand, auxiliary link data having an auxiliary link SL3 and auxiliary nodes SN5 and SN6 at two ends of the auxiliary link SL3 is generated on the return-point side. Specifically, the auxiliary link SL3 is generated based on the existing road link L2, the auxiliary node SN5 is generated based on an existing road node N3 and the auxiliary node SN6 is generated based on the learned road node GN2. Similarly, auxiliary link data having an auxiliary link SL4 and auxiliary nodes SN7 and SN8 at two ends of the auxiliary link SL4 is generated on the return-point side. Specifically, the auxiliary link SL4 is generated based on the existing road link L2, the auxiliary node SN7 is generated based on the learned road node GN2 and the auxiliary node SN8 is generated based on an existing road node N4. The existing road nodes N3 and N4 are at two ends of the existing road link L2. The auxiliary links SL3 and SL4 correspond to links obtained by dividing the existing road link L2 as the base link at the return-point.

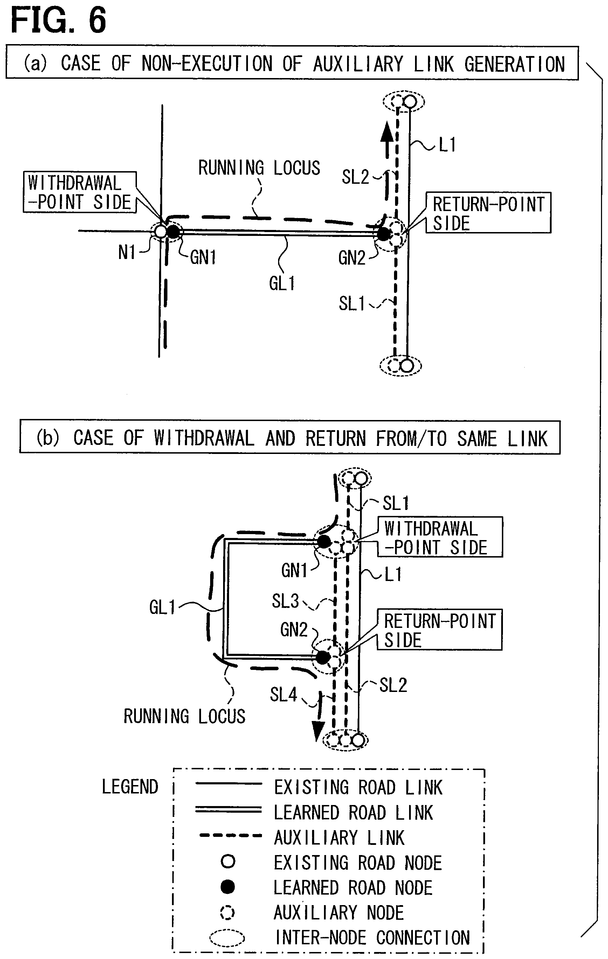

In (a) of FIG. 6, an example in which auxiliary link data is not generated according to a connection point between an existing road and a learned road is shown. In this example, the running locus directly withdraws from an existing road node N1 (withdrawal-point) and returns to a midpoint (return-point) of an existing road link L1 in the ready-made map data.

As shown in (a) of FIG. 6, learned road data having a learned road link GL1, a learned road node GN1 as a link end node on the withdrawal-point side and a learned road node GN2 as a link end node on the return-point side is generated.

In this example, the learned road link GL1 is directly connected with the existing road node N1 at the withdrawal-point side end (learned road node GN1). In this case, auxiliary link data corresponding to the withdrawal-point side of the learned road link GL1 is not generated. On the other hand, on the return-point side of the learned road link GL1, auxiliary link data having an auxiliary link SL1 and auxiliary nodes at ends of the auxiliary link SL1 and auxiliary link data having an auxiliary link SL2 and auxiliary nodes at ends of the auxiliary link SL2 are generated. Similarly to the example descried above, the auxiliary link SL1 is generated based on the existing road link L1, the auxiliary node corresponding to one existing road node is generated based on the existing road node and the auxiliary node corresponding to the learned road node is generated based on the learned road node.

In (b) of FIG. 6, an example according to the invention of generating auxiliary link data corresponding to a learned road, which withdraws from an existing road link registered in the ready-made map data and returns to the same existing road link, is shown. In this example, the running locus withdraws on an upstream side (withdrawal-point) of the existing road link L1 and returns to the same existing road link L1 on a downstream side (return-point).

As shown in (b) of FIG. 6, learned road data having a learned road link GL1, a learned road node GN1 as a link end node on the withdrawal-point side, and a learned road node GN2 as a link end node on the return-point side is generated based on the running locus.

First, auxiliary link data on the withdrawal-point side is generated in a similar way of generating the auxiliary link data described above. Specifically, auxiliary link data having an auxiliary link SL1 and auxiliary nodes at ends of the auxiliary link SL1, and auxiliary link data having an auxiliary link SL2 and auxiliary nodes at ends of the auxiliary link SL2 are generated on the withdrawal-point side based on the existing road link L1 and existing road nodes of the existing road link L1. The existing road link L1 is a base link.

Next, auxiliary link data on the return-point side is generated. Specifically, auxiliary link data having an auxiliary link SL3 and auxiliary nodes at ends of the auxiliary link SL3, and auxiliary link data having an auxiliary link SL4 and auxiliary nodes at ends of the auxiliary link SL4 are generated on the return-point side based on the auxiliary link SL2 and the auxiliary nodes of the auxiliary link SL2. In this case, the auxiliary link SL2 on the return-point side, viewed from the withdrawal-point side, is used as a base link instead of the existing road link L1.

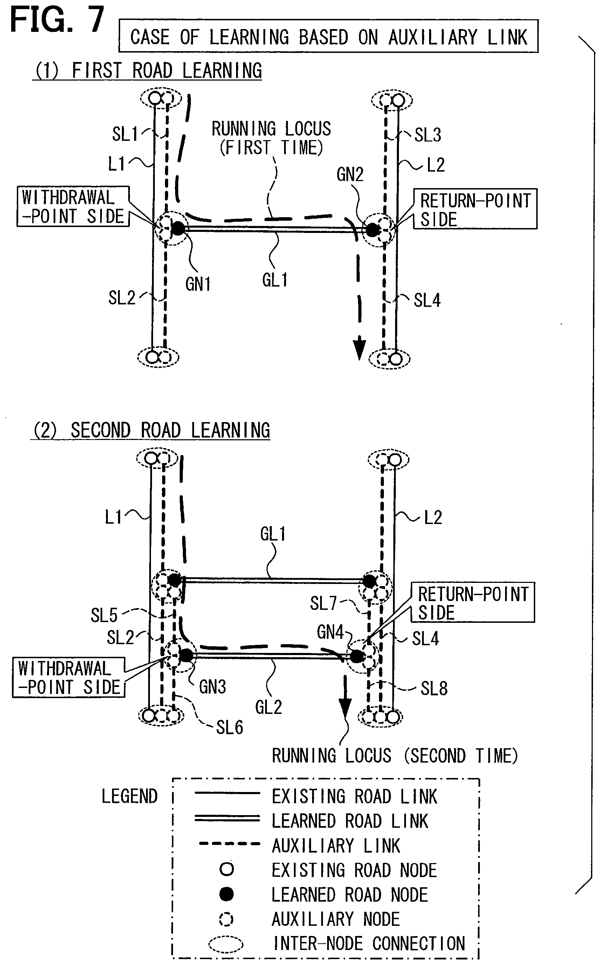

FIG. 7 is a diagram showing an example of generating several sets of auxiliary link data corresponding to respective learned roads when the road learning is performed several times in an existing road.

In (1) of FIG. 7, a first road learning is shown. First, learned road data having a learned road link GL1 and learned road nodes GN1 and GN2 of the learned road link GL1 is generated based on a first running locus, which withdraws from a midpoint (first withdrawal-point) of an existing road link L1 in the ready-made map data and returns to a midpoint (first return-point) of another existing road link L2 in the ready-made map data.

Next, auxiliary link data having an auxiliary link SL1 and auxiliary nodes at ends of the auxiliary link SL1, and auxiliary link data having an auxiliary link SL2 and auxiliary nodes at ends of the auxiliary link SL2 are generated on the first withdrawal-point side based on the existing road link L1 in a similar way described above. Further, auxiliary link data having an auxiliary link SL3 and auxiliary nodes at ends of the auxiliary link SL3, and auxiliary link data having an auxiliary link SL4 and auxiliary nodes at ends of the auxiliary link SL4 are generated on the first return-point side based on the existing road link L2 in a similar way described above.

In (2) of FIG. 7, a second road leaning is shown. In the second road learning, it is assumed that another learned road is detected on a downstream side of the learned road detected in the first road learning. In the second road learning, learned road data having a learned road link GL2 and learned road nodes GN3 and GN4 of the learned road link GL2 is generated based on a second running locus which withdraws from a downstream-side point (second withdrawal-point) of the existing road link L1 and returns to a downstream-side point (second return-point) of the existing road link L2.

Next, auxiliary link data on the second withdrawal-point side is generated. Specifically, auxiliary link data having an auxiliary link SL5 and auxiliary nodes of the auxiliary link SL5, and auxiliary link data having an auxiliary link SL6 and auxiliary nodes of the auxiliary link SL6 are generated on the second withdrawal-point side based on the auxiliary link SL2 and the auxiliary nodes of the auxiliary link SL2, which are on the second withdrawal-point side, instead of the existing road link L1.

Further, auxiliary link data on the second return-point side is generated. Specifically, auxiliary link data having an auxiliary link SL7 and auxiliary nodes of the auxiliary link SL7, and auxiliary link data having an auxiliary link SL8 and auxiliary nodes of the auxiliary link SL8 are generated on the second return-point side based on the auxiliary link SL4 and the auxiliary nodes of the auxiliary link SL4, which are on the second return-point side, instead of the existing road link L2.

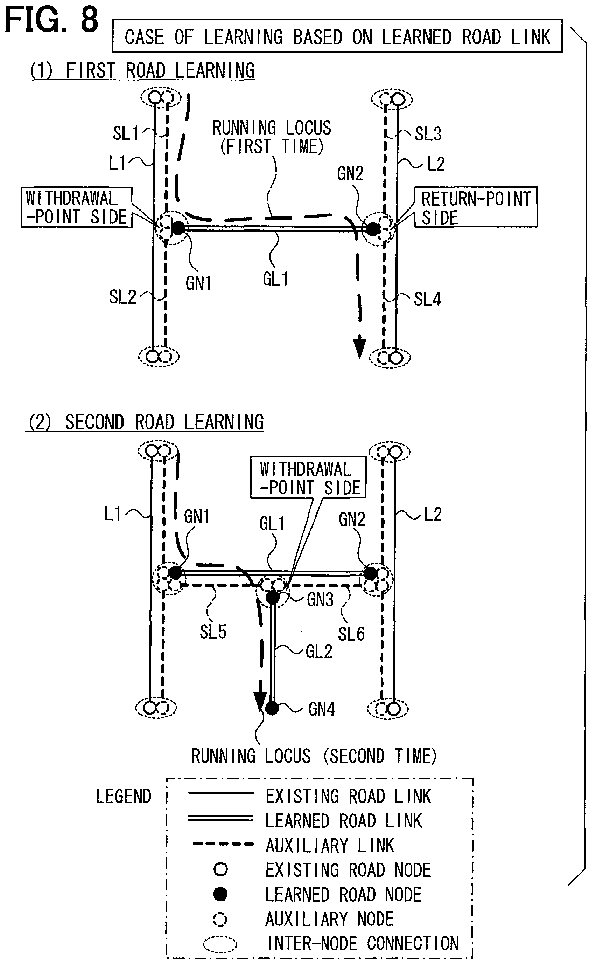

FIG. 8 is a diagram showing an example of generating auxiliary link data corresponding to a learned road in a case where the road learning is performed with a learned road obtained previously as a starting point.

In (1) of FIG. 8, a first road learning is shown. The generation of learned road data is similar to the generation of learned road data in the first road learning described in (1) of FIG. 7. A running locus of the first road learning withdraws from a midpoint (first withdrawal-point) of an existing road link L1 and returns to a midpoint (return-point) of an existing road link L2. Then, auxiliary link data having an auxiliary link SL1 and auxiliary nodes at ends of the auxiliary link SL1, and auxiliary link data having an auxiliary link SL2 and auxiliary nodes at ends of the auxiliary link SL2 are generated on the first withdrawal-point side based on the existing road link L1 in a similar way described above. Further, auxiliary link data having an auxiliary link SL3 and auxiliary nodes at ends of the auxiliary link SL3, and auxiliary link data having an auxiliary link SL4 and auxiliary nodes at ends of the auxiliary link SL4 are generated on the first return-point side based on the existing road link L2 in a similar way described above.

In (2) of FIG. 8, a second road leaning is shown. In the second road learning, it is assumed that another learned road, which withdraws from a midpoint (second withdrawal-point) of the learned road obtained in the first road learning, is detected. In the second road learning, first, learned road data having a learned road link GL2 and learned road nodes GN3 and GN4 of the learned road link GL2 is generated based on a running locus which withdraws from the midpoint of the learned road link GL1 generated in the first road learning.

Next, auxiliary link data on the second withdrawal-point side is generated. Specifically, two sub-sets of auxiliary link data, having auxiliary links SL5 and SL6 and respective auxiliary nodes of the auxiliary links SL5 and SL6 are generated based on the learned road link GL1 and learned road nodes of the learned road link GL1 generated in the first road learning.

Each or any combination of sections explained in the above can be achieved as (i) a software section in combination with a hardware unit (e.g., computer) or (ii) a hardware section, including or not including a function of a related apparatus; furthermore, the hardware section may be constructed inside of a microcomputer.

Furthermore, the software section may be included in a software program, which may be contained in a non-transitory computer-readable storage media as a program product.

### [Explanation of Validity and Invalidity Setting in Learned Road Data and Auxiliary Link Data]

In the above-described methods of generating auxiliary link data, an auxiliary link corresponding to a new learned road is generated with an already-generated existing auxiliary link or a learned road link as a base link in some cases,. In this case, the auxiliary link or the learned road link used as the base link may be overlapped with an auxiliary link newly generated by copying the base link in a same section.

Accordingly, in the navigation apparatus 1 according to the present embodiment, validity of a link data is settable to avoid the overlap of the link data. Specifically, when the auxiliary link and the learned road link overlap each other in the same section, validity of the auxiliary link or the learned road link, which is unnecessary, is settable in attribute information so as to set the link data unavailable. With validity setting, the overlapped link data can be organized without deleting the unnecessary link data, and the consistency of connection between roads in the map can be ensured. Further, the link data, which is set to invalid, can be set back to valid, if necessary, so as to set the link data available.

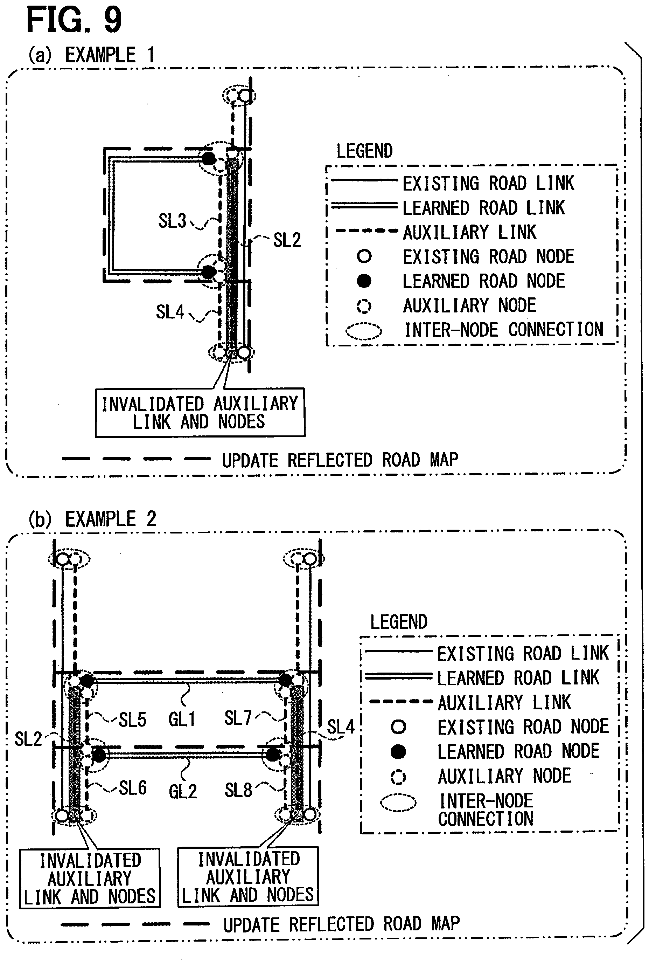

Examples of the validity setting will be described with reference to FIG. 9 to FIG. 10. In (a) of FIG. 9, a learned road, which withdraws from an existing road link and returns to the same existing road link, is added. In this example according to the invention, as described in (b) of FIG. 6, the auxiliary link data having the auxiliary link SL3 and the auxiliary nodes at ends of the auxiliary link SL3, and the auxiliary link data having the auxiliary link SL4 and the auxiliary nodes at ends of the auxiliary link SL4 are generated based on the auxiliary link SL2 and the auxiliary nodes of the auxiliary link SL2. As a result, the auxiliary link SL2 is overlapped with the auxiliary links SL3 and SL4 in the same section. Thus, the auxiliary link SL2, which is a base link, and the auxiliary nodes of the auxiliary link SL2 are set to invalid by setting attribute information of the auxiliary link SL2 and the auxiliary nodes of the auxiliary link SL2. By this validity setting, the consistency of the connection relation between the existing road and the auxiliary link with an actual road map, which is indicated with a broken line in (a) of FIG. 9, can be ensured.

In the example shown in (a) of FIG. 9, when the user makes a correction or the like to the result of the road learning and the return-point of the learned road is added to another existing road link, the existing auxiliary links SL3 and SL4 become unnecessary and the auxiliary link SL2 set to invalid becomes necessary. In this case, the auxiliary links SL3 and SL4 and respective auxiliary nodes of the auxiliary links SL3 and SL4 are set to invalid, and the auxiliary link SL2 and the auxiliary nodes of the auxiliary link SL2 are set back from invalid to valid.

In (b) of FIG. 9, two learned roads, which are learned by performing the road learning twice in the same existing road, are added. In this example, as described in FIG. 7, the auxiliary links SL5 and SL6 are generated with the already generated auxiliary link SL2 as a base link, the auxiliary links SL7 and SL8 are generated with the already generated auxiliary link SL4 as a base link. Auxiliary nodes of the auxiliary links SL5, SL6, SL7, SL8 are generated based on respective auxiliary nodes of the auxiliary links SL2 and SL4. As a result, the auxiliary link SL2 overlaps with the auxiliary links SL5 and SL6 in the same section, and the auxiliary link SL4 overlaps with the auxiliary links SL7 and SL8 in the same section. Thus, the auxiliary links SL2 and SL4, which are base links, and the auxiliary nodes of the auxiliary link SL2 and SL4 are set to invalid by setting attribute information of the auxiliary links SL2 and SL4, attribute information of the auxiliary nodes of the auxiliary links SL2 and SL4. By this validity setting, the consistency of the connection relation between the existing road and the auxiliary link with an actual road map, which is indicated with a broken line in (b) of FIG. 9, can be ensured.

In the example shown in (b) of FIG. 9, when the user cancel the result of the second road learning or the like to cancel the learned road link GL2, the existing auxiliary links SL5, SL6, SL7 and SL8 become unnecessary. At the same time, the auxiliary links SL2 and SL4, which are set invalid, become necessary in order to restructure the consistency of the connection between the remaining learned road link GL1 and the existing road. In this case, the learned road link GL2 and the learned road nodes of the learned road link GL2, the auxiliary links SL5, SL6, SL7 and SL8 and the respective auxiliary nodes of the auxiliary links SL5, SL6, SL7 and SL8 are set to invalid. In addition, the auxiliary links SL2 and SL4 and the auxiliary nodes of the auxiliary links SL2 and SL4 are set back from invalid to valid.

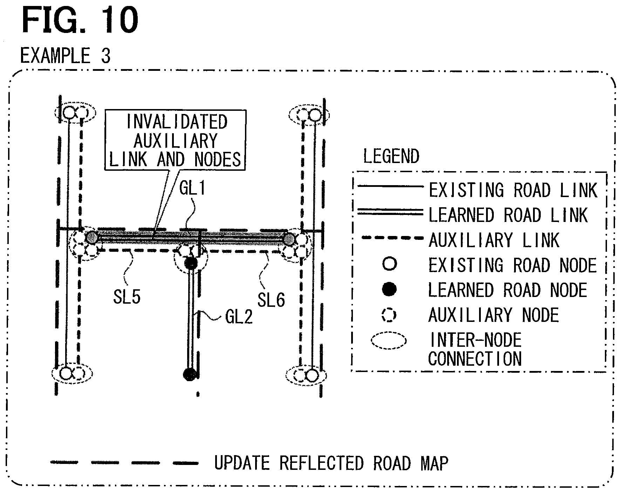

FIG. 10 shows a new learned road, which is connected with a previously obtained existing learned road, is added. In this example, as described in FIG. 8, the auxiliary links SL5, SL6 and the auxiliary nodes of the auxiliary links SL5, SL6 are generated respectively based on the learned road link GL1 and the learned road nodes of the learned road link GL1. As a result, the learned road link GL1 overlaps with the auxiliary links SL5 and SL6 in the same section. Thus, the learned road link GL1, which is a base link, and the learned road nodes of the learned road link GL1 are set to invalid by setting attribute information of the learned road link GL1 and learned road nodes of the learned road link GL1. By this validity setting, the consistency of the connection relation between the existing road and the auxiliary link with an actual road map, which is indicated with a broken line in FIG. 10, can be ensured.

In the example shown in FIG. 10, when the user cancel the result of the second road learning or the like to cancel the learned road link GL2, the existing auxiliary links SL5 and SL6 become unnecessary. At the same time, the learned road link GL1, which is set invalid, become necessary in order to restructure the consistency of the connection between the remaining learned road link GL1 and the existing road. In this case, the learned road link GL2 and the learned road nodes of the learned road link GL2 are set to invalid, and the learned road link GL1 and the learned road nodes of the learned road link GL1 are set back from invalid to valid.

### [Advantages]

The navigation apparatus 1 according to the present embodiment provides advantages as described below.

When recording learned road data obtained by running a road not existing in a ready-made map, the controller 29 generates the auxiliary link data, which logically connects the learned road link with the existing road link, and records the learned road data and the auxiliary link data together in association with each other. At this time, the road data in the ready-made map data initially existing in the navigation apparatus 1 is not changed. With this configuration, in the navigation apparatus 1, which utilizes map data not on the premise of partial map update, newly learned road data detected by the road learning function is possible to be added and used as map data without changing the original map data in the navigation apparatus 1.

Additionally, the auxiliary link data, which is generated in association with the learned road data, has attribute information and shape information copied from the base link data. Thus, route guidance, which has high consistency with the existing map based on the excerpted attribute information and shape information, can be provided to the user.

Further, the auxiliary link data can be set to valid or invalid. Thus, use of the road data, which is related to unnecessary learned roads and auxiliary links in route guidance, can be avoided without deleting the unnecessary road data. That is, the unnecessary road data is stored in the storages. With this configuration, the consistency of connection between the existing road and the auxiliary links is possible to be restructured, and partial update of the map can be realized.

In contrast, as already explained in the conventional navigation apparatus, when the road data of the unregistered road is newly added to map data, which needs the above-mentioned partial map update as a premise, it is necessary to ensure consistency of road network in the map data changed from the original map data. For this purpose, it may be necessary to perform heavy-loaded processing of editing the learned road data and the original map data into one data, i.e., authoring. Under the navigation apparatus according to the present embodiment, such heavy-loaded authoring may be unnecessary.

### [Function]

The function of constituent elements of the navigation apparatus 1 may be referred as follows. The map data storage portion 24 may function as a ready-made road data storage portion, device, or means. The learned road data storage portion 25 may function as a learned road data storage device, or means. The controller 29 may function as a learned road detection section, device, or means (S100, S110 in FIG. 2), an auxiliary link data generation section, device, or means (S120 in FIG. 2), a recording section, device, or means (S130 in FIG. 2), and a setting section, device, or means to set the attribute information. Further, the learned road detection section may use or incorporate the position detector 21.

### [Optional Aspects]

While aspects of the disclosure described herein are already recited in the foregoing, further optional aspects thereto may be set out as follows.

For instance, as an optional aspect of the disclosure, the auxiliary end nodes in the auxiliary link data, which is generated by the auxiliary link data generation section, may have attribute information excerpted from attribute information of end nodes of the base link.

As another optional aspect of the disclosure, the auxiliary link in the auxiliary link data, which is generated by the auxiliary link data generation section, may have shape information or attribute information excerpted from shape information or attribute information of the base link.

With above-described configuration, when the auxiliary link data is used in the route guidance, the route guidance can be performed with high consistency with the existing map based on the excerpted attribute information and shape information of the original map data.

As another optional aspect of the disclosure, when the detected learned road is directly connected with a link end of the existing road, the auxiliary link data generation section may not generate the auxiliary link and the other auxiliary link based on the road data of the existing road.

With above-described configuration, when a road learning method without requirement of change of original map data, the consistency of connection between the learned road and the existing road can be ensured without generating the auxiliary link.

As another optional aspect of the disclosure, when the detected learned road withdraws from the link of the existing road at the withdrawal-point and returns to the same link of the existing road at the return-point, the auxiliary link data generation section may generate auxiliary link data of the withdrawal-point on a withdrawal-point side, and auxiliary link data of the return-point on a return-point side. The auxiliary link data of the withdrawal-point may be generated based on the road data of the base link that is defined as the link of the existing road connected with the detected learned road. The auxiliary link data of the withdrawal-point may be related to a withdrawal-point auxiliary link, which connects a first end of the base link and the withdrawal-point of the existing road, and auxiliary end nodes of the withdrawal-point auxiliary link. The first end may be one of two ends of the base link and linking with the withdrawal-point without the return point being intervening. The auxiliary link data of the withdrawal-point may be also related to an other withdrawal-point auxiliary link, which connects the withdrawal-point of the existing road and a second end of the base link, and auxiliary end nodes of the other withdrawal-point auxiliary link. The second end may be an other of the two ends of the base link and linking with the withdrawal-point with the return point being intervening. The auxiliary link data of the return-point may be generated based on road data of an auxiliary base link that is defined as the other withdrawal-point auxiliary link. The auxiliary link data of the return-point may be related to a return-point auxiliary link, which connects one end of the auxiliary base link and the return-point of the existing road, and auxiliary end nodes of the return-point auxiliary link. The auxiliary link data of the return-point may be also related to an other return-point auxiliary link, which connects the return-point of the existing road and an other end of the auxiliary base link, and auxiliary end nodes of the other return-point auxiliary link.

With above-described configuration, it is possible to generate auxiliary links, which correspond to two connection points to the learned road based on one existing road link. The two connection points are the withdrawal-point and the return-point.

As another optional aspect of the disclosure, when (i) the detected learned road is connected with an existing road via a connection point placed on the existing road and (ii) auxiliary link data generated based on road data of the existing road already exists in the learned road data storage portion as first auxiliary link data, the auxiliary link data generation section may generate second auxiliary link data based on road data of a connection-side auxiliary base link that is defined as an auxiliary link, which is included in the first auxiliary link data and passes through the connection point between the existing road and the detected learned road. The second auxiliary link data may be related to a second auxiliary link, which connects one end of the connection-side auxiliary base link with the connection point between the existing road and the detected learned road, and auxiliary end nodes of the second auxiliary link. The second auxiliary link data may be also related to an other second auxiliary link, which connects the connection point between the existing road and the detected learned road and an other end of the connection-side auxiliary base link, and auxiliary end nodes of the other second auxiliary link. The recording section may record the road data of the detected learned road and the second auxiliary link data generated with respect to the detected learned road in the learned road data storage portion.

With above-described configuration, when an auxiliary link is newly generated, since the already existing auxiliary link is used as the base link, the consistency of connection can be ensured between the newly generated auxiliary link and the existing auxiliary link.

As another optional aspect of the disclosure, the learned road detection section may further utilize a learned road already registered in the learned road data storage portion as a detection target from which a new learned road is detected, and generate road data of the new learned road based on the traveling locus, when the running position of the vehicle withdraws from or returns to the learned road already registered in the learned road data storage portion. The auxiliary link data generation section may generate auxiliary link data corresponding to the new learned road based on road data of the learned road already registered in the learned road data storage portion when the existing road connected with the new learned road corresponds to the learned road already registered in the learned road data storage portion.

With above navigation apparatus, a new road can be further detected and learned from a previously obtained learned road, and the effectiveness of the road learning function can be improved.

As another optional aspect of the disclosure, the navigation apparatus may further include a setting section that sets attribute information which defines validity or invalidity of the road data of the learned road and/or the auxiliary link data stored in the learned road data storage portion.

With above navigation apparatus, use of the road data, which is related to unnecessary learned roads and auxiliary links in route guidance, can be avoided by setting the unnecessary road data to invalid without deleting unnecessary road data. That is, unnecessary road data is still stored in the storages. Further, when a part of the learned road is manually deleted by a user, and the consistency of inter-road connection of the remained learned road needs to be restructured, the consistency of inter-road connection can be restructured by setting back the attribute information of the remained learned road data from invalid to valid.

## Claims

1. A navigation apparatus (1) for providing route guidance to a vehicle the navigation apparatus comprising:
a ready-made road data storage portion (24) that stores road data of existing roads in a ready-made map, the road data of the existing roads being used in route guidance;
a learned road data storage portion (25) that is different from the ready-made road data storage portion (24) and stores road data of a learned road, and auxiliary link data connecting a link of the learned road and a link of an existing road, the road data of the learned road and the auxiliary link data being used in route guidance;
a learned road detection section (29, S100, S110) that detects a new road based on a traveling locus from a withdrawal-point where a running position of the vehicle withdraws from an existing road stored in the ready-made road data storage portion (24) to a return-point where the running position of the vehicle returns to an existing road stored in the ready-made road data storage portion (24), the new road detected by the learned road detection section being referred to as a detected learned road, the learned road detection section generating road data related to a link of the detected learned road and end nodes of the link of the detected learned road;
an auxiliary link data generation section (29, S120) that generates auxiliary link data based on road data of a base link (L1, L2) that is defined as a link of the existing road connected with the detected learned road, the auxiliary link data relating to an auxiliary link, which connects one end of the base link (L1, L2) and a connection point between the existing road and the detected learned road, and auxiliary end nodes of the auxiliary link, the auxiliary link data also relating to an other auxiliary link, which connects an other end of the base link (L1, L2) and the connection point between the existing road and the detected learned road, and auxiliary end nodes of the other auxiliary link; and
a recording section (29, S130) that records (i) the road data of the detected learned road generated by the learned road detection section and (ii) the auxiliary link data generated with respect to the detected learned road by the auxiliary link data generation section in the learned road data storage portion (25), **characterized in that**
when the detected learned road withdraws from the link of the existing road at the withdrawal-point and returns to the same link of the existing road at the return-point, the auxiliary link data generation section generates auxiliary link data of the withdrawal-point on a withdrawal-point side, and generates auxiliary link data of the return-point on a return-point side,
wherein the auxiliary link data generation section (29, S120) generates the auxiliary link data of the withdrawal-point based on the road data of the base link (L1) that is defined as the link of the existing road connected with the detected learned road,
the auxiliary link data of the withdrawal-point is related to
a withdrawal-point auxiliary link (SL1), which connects a first end of the base link (L1) and the withdrawal-point of the existing road, and auxiliary end nodes of the withdrawal-point auxiliary link (SL1), the first end being one of two ends of the base link (L1) and linking with the withdrawal-point without the return-point being intervening,
an other withdrawal-point auxiliary link (SL2), which connects the withdrawal-point of the existing road and a second end of the base link (L1), and auxiliary end nodes of the other withdrawal-point auxiliary link (SL2), the second end being an other of the two ends of the base link (L1) and linking with the withdrawal-point with the return-point being intervening,
wherein the auxiliary link data generation section (29, S120) generates the auxiliary link data of the withdrawal-point by copying data from the road data of the base link (L1), and wherein the auxiliary link data of the withdrawal-point has attribute information and shape information copied from the road data of the base link (L1) stored in the ready-made road data storage portion (24),
wherein the auxiliary link data generation section (29, S120) generates the auxiliary link data of the return-point based on road data of an auxiliary base link which is defined as the other withdrawal-point auxiliary link (SL2),
the auxiliary link data of the return-point is related to
a return-point auxiliary link (SL3), which connects one end of the auxiliary base link (SL2) and the return-point of the existing road, and auxiliary end nodes of the return-point auxiliary link (SL3), and
an other return-point auxiliary link (SL4), which connects the return-point of the existing road and an other end of the auxiliary base link (SL2), and auxiliary end nodes of the other return-point auxiliary link (SL4),
wherein the auxiliary link data generation section (29, S120) generates the auxiliary link data of the return-point by copying data from the road data of the auxiliary base link (SL2), and wherein the auxiliary link data of the return-point has attribute information and shape information copied from the road data of the auxiliary base link (SL2) stored in the learned road data storage portion (25),
wherein the navigation apparatus further comprises a setting section (29),
wherein, when the auxiliary link data generation section generates the auxiliary link data of the return-point, the setting section sets the attribute information of the auxiliary base link data for invalidating the auxiliary base link data.

2. The navigation apparatus according to claim 1,
wherein the auxiliary end nodes in the auxiliary link data, which is generated by the auxiliary link data generation section, have the attribute information excerpted from attribute information of end nodes of the base link.

3. The navigation apparatus according to claim 1 or 2,
wherein the auxiliary link in the auxiliary link data, which is generated by the auxiliary link data generation section, has the shape information or the attribute information excerpted from shape information or attribute information of the base link.

4. The navigation apparatus according to any one of claims 1 to 3,
wherein, when the detected learned road is directly connected with a link end of the existing road, the auxiliary link data generation section does not generate the auxiliary link and the other auxiliary link based on the road data of the existing road.

5. The navigation apparatus according to any one of claims 1 to 4,
wherein, when (i) the detected learned road is connected with an existing road via a connection point placed on the existing road and (ii) auxiliary link data generated based on road data of the existing road already exists in the learned road data storage portion as first auxiliary link data, the auxiliary link data generation section generates second auxiliary link data based on road data of a connection-side auxiliary base link that is defined as an auxiliary link, which is included in the first auxiliary link data and passes through the connection point between the existing road and the detected learned road ,
wherein the second auxiliary link data is related to
a second auxiliary link, which connects one end of the connection-side auxiliary base link with the connection point between the existing road and the detected learned road, and auxiliary end nodes of the second auxiliary link, and
an other second auxiliary link, which connects the connection point between the existing road and the detected learned road and an other end of the connection-side auxiliary base link, and auxiliary end nodes of the other second auxiliary link, and
wherein the recording section records the road data of the detected learned road and the second auxiliary link data generated with respect to the detected learned road in the learned road data storage portion.

6. The navigation apparatus according to any one of claims 1 to 5, wherein:
the learned road detection section further
utilizes a learned road already stored in the learned road data storage portion as a detection target from which a new learned road is detected, and
generates road data of the new learned road based on the traveling locus when the running position of the vehicle withdraws from or returns to the learned road already stored in the learned road data storage portion; and
the auxiliary link data generation section generates auxiliary link data corresponding to the new learned road based on road data of the learned road already stored in the learned road data storage portion when the existing road connected with the new learned road corresponds to the learned road already stored in the learned road data storage portion.

7. The navigation apparatus according to any one of claims 1 to 6, wherein:
the setting section (29) sets attribute information which defines validity or invalidity of the road data of the learned road, the auxiliary base link data and the auxiliary link data of the return-point stored in the learned road data storage portion (25).

8. A program product stored in a non-transitory computer readable storage medium comprising instructions for execution by a computer, the instructions including a computer-implemented method for a navigation apparatus (1) providing route guidance to a vehicle using road data indicating links and end nodes of the links relative to roads,
the navigation apparatus including
(i) a ready-made road data storage portion (24) in which existing road data relative to existing roads on a ready-made map is stored, and
(ii) a learned road data storage portion (25) in which road data relative to learned roads is stored,
the instructions for implementing:
a step (S100) of detecting a new learned road, which is not stored in the ready-made road data storage portion (24), based on a traveling locus from a withdrawal-point where a running position of the vehicle withdraws from a withdrawal existing link (L1) of a withdrawal existing road stored in the ready-made road data storage portion to a return-point where the running position of the vehicle returns to a return existing link (L2) of a return existing road stored in the ready-made road data storage portion;
a step (S110) of generating learned road data of the new learned road, the learned road data indicating (i) a learned link (GL1) of the new learned road and (ii) first and second learned end nodes (GN1, GN2) of the learned link of the new learned road;
a step (S120) of defining each of the withdrawal existing link and the return existing link as a base link (L1, L2) while defining each of the withdrawal-point and the return-point as a connection point;
a step (S120) of generating, based on road data relative to the base link (L1, L2) stored in the ready-made road data storage portion (24), auxiliary link data with respect to each connection point of the base link (L1, L2), the auxiliary link data indicating
(i) a first auxiliary link (SL1, SL3), which connects the each connection point with one of two end nodes of the base link (L1, L2), and two auxiliary end nodes (SN1, SN2, SN5, SN6) of the first auxiliary link and
(ii) a second auxiliary link (SL2, SL4), which connects the each connection point with an other of the two end nodes (SN3, SN4, SN7, SN8) of the base link (L1, L2), and two auxiliary end nodes of the second auxiliary link; and
a step (S130) of recording, with respect to the new learned road, the learned road data and the auxiliary link data in association with each other in the learned road data storage portion (25), **characterized in that**
in the step (S100) of detecting the new learned road, when the detected learned road withdraws from the link of the existing road at the withdrawal-point and returns to the same link of the existing road at the return-point, the auxiliary link data generation section generates auxiliary link data of the withdrawal-point on a withdrawal-point side, and generates auxiliary link data of the return-point on a return-point side,
in step (120) of generating the auxiliary link data, the auxiliary link data of the withdrawal-point is generated based on the road data of the base link (L1) that is defined as the link of the existing road connected with the detected learned road,
the auxiliary link data of the withdrawal-point is related to
a withdrawal-point auxiliary link (SL1), which connects a first end of the base link (L1) and the withdrawal-point of the existing road, and auxiliary end nodes of the withdrawal-point auxiliary link (SL1), the first end being one of two ends of the base link (L1) and linking with the withdrawal-point without the return-point being intervening,
an other withdrawal-point auxiliary link (SL2), which connects the withdrawal-point of the existing road and a second end of the base link (L1), and auxiliary end nodes of the other withdrawal-point auxiliary link (SL2), the second end being an other of the two ends of the base link (L1) and linking with the withdrawal-point with the return-point being intervening,
in step (120) of generating the auxiliary link data, the auxiliary link data of the withdrawal-point is generated by copying data from the road data relative to the base link (L1), and the auxiliary link data of the withdrawal-point has attribute and shape information copied from the road data of the base link (L1) stored in the ready-made road data storage portion (24),
in step (120) of generating the auxiliary link data, the auxiliary link data of the return-point is generated based on road data of an auxiliary base link which is defined as the other withdrawal-point auxiliary link (SL2),
the auxiliary link data of the return-point is related to
a return-point auxiliary link (SL3), which connects one end of the auxiliary base link (SL2) and the return-point of the existing road, and auxiliary end nodes of the return-point auxiliary link (SL3), and
an other return-point auxiliary link (SL4), which connects the return-point of the existing road and an other end of the auxiliary base link (SL2), and auxiliary end nodes of the other return-point auxiliary link,
in step (120) of generating the auxiliary link data, the auxiliary link data of the return-point is generated by copying data from the road data relative to the auxiliary base link (SL2), and the auxiliary link data of the return-point has attribute and shape information copied from the road data of the auxiliary base link (SL2) stored in the learned road data storage portion (25),
wherein, when the auxiliary link data of the return-point is generated, the attribute information of the auxiliary base link data is set for invalidating the auxiliary base link data.

## Patentansprüche

1. Eine Navigationsvorrichtung (1) zur Bereitstellung einer Zielführung für ein Fahrzeug, die Navigationsvorrichtung umfassend:
einen vorgefertigten Straßendatenspeicherabschnitt (24), welcher Straßendaten von existierenden Straßen in einer vorgefertigten Karte speichert, wobei die Straßendaten der existierenden Straßen in einer Zielführung verwendet werden;
einen Gelernte-Straßen-Datenspeicherabschnitt (25), der unterschiedlich zu dem vorgefertigten Straßendatenspeicherabschnitt (24) ist und Straßendaten einer gelernten Straße und Hilfsverbindungsdaten, die eine Verbindung der gelernten Straße und eine Verbindung einer existierenden Straße verbinden, speichert, wobei die Straßendaten der gelernten Straße und die Hilfsverbindungsdaten in einer Zielführung verwendet werden;
einen Gelernte-Straße-Detektionsabschnitt (29, S100, S110), welcher eine neue Straße basierend auf einer Fahrortslinie von einem Entfernungspunkt, wo eine Fahrposition des Fahrzeugs sich von einer in dem vorgefertigten Straßendatenspeicherabschnitt (24) gespeicherten existierenden Straße entfernt, zu einem Rückkehrpunkt, wo die Fahrposition des Fahrzeugs zu einer in dem vorgefertigten Straßendatenspeicherabschnitt (24) gespeicherten existierenden Straße zurückkehrt, detektiert, wobei die von dem Gelernte-Straße-Detektionsabschnitt detektierte neue Straße als eine detektierte gelernte Straße bezeichnet wird, wobei der Gelernte-Straße-Detektionsabschnitt Straßendaten erzeugt, die sich auf eine Verbindung der detektierten gelernten Straße und Endknoten der Verbindung der detektierten gelernten Straße beziehen;
einen Hilfsverbindungsdatenerzeugungsabschnitt (29, S120), welcher Hilfsverbindungsdaten basierend auf Straßendaten einer Basisverbindung (L1, L2), die als eine Verbindung der mit der detektierten gelernten Straße verbundenen existierenden Straße definiert ist, erzeugt, wobei sich die Hilfsverbindungsdaten auf eine Hilfsverbindung, welche ein Ende der Basisverbindung (L1, L2) und einen Verbindungspunkt zwischen der existierenden Straße und der detektierten gelernten Straße verbindet, und Hilfsendknoten der Hilfsverbindung beziehen, wobei sich die Hilfsverbindungsdaten auch auf eine andere Hilfsverbindung, welche ein anderes Ende der Basisverbindung (L1, L2) und den Verbindungspunkt zwischen der existierenden Straße und der detektierten gelernten Straße verbindet, und Hilfsendknoten der anderen Hilfsverbindung beziehen; und
einen Aufzeichnungsabschnitt (29, S130), welcher (i) die Straßendaten der von dem Gelernte-Straße-Detektionsabschnitt erzeugten detektierten gelernten Straße und (ii) die in Bezug auf die detektierte gelernte Straße von dem Hilfsverbindungsdatenerzeugungsabschnitt erzeugten Hilfsverbindungsdaten in dem Gelernte-Straße-Datenspeicherabschnitt (25) aufzeichnet, **dadurch gekennzeichnet, dass**
wenn sich die detektierte gelernte Straße von der Verbindung der existierenden Straße an dem Entfernungspunkt entfernt und zu derselben Verbindung der existierenden Straße an dem Rückkehrpunkt zurückkehrt, der Hilfsverbindungsdatenerzeugungsabschnitt Hilfsverbindungsdaten des Entfernungspunkts an einer Entfernungspunktseite erzeugt und Hilfsverbindungsdaten des Rückkehrpunkts an einer Rückkehrpunktseite erzeugt,
wobei der Hilfsverbindungsdatenerzeugungsabschnitt (29, S120) die Hilfsverbindungsdaten des Entfernungspunkts basierend auf den Straßendaten der Basisverbindung (L1), die als die Verbindung der mit der detektierten gelernten Straße verbundenen existierenden Straße definiert ist, erzeugt,
wobei die Hilfsverbindungsdaten des Entfernungspunktes bezogen sind auf
eine Entfernungspunkthilfsverbindung (SL1), welche ein erstes Ende der Basisverbindung (L1) und den Entfernungspunkt der existierenden Straße verbindet, und Hilfsendknoten der Entfernungspunkthilfsverbindung (SL1), wobei das erste Ende eines von zwei Enden der Basisverbindung (L1) ist und sich mit dem Entfernungspunkt verbindet, ohne dass der Rückkehrpunkt dazwischenkommt,
eine andere Entfernungspunkthilfsverbindung (SL2), welche den Entfernungspunkt der existierenden Straße und ein zweites Ende der Basisverbindung (L1) verbindet, und Hilfsendknoten der anderen Entfernungspunkthilfsverbindung (SL2), wobei das zweite Ende ein anderes der zwei Enden der Basisverbindung (L1) ist und sich mit dem Entfernungspunkt verbindet, wobei der Rückkehrpunkt dazwischenkommt,
wobei der Hilfsverbindungsdatenerzeugungsabschnitt (29, S120) die Hilfsverbindungsdaten des Entfernungspunkts durch Kopieren von Daten von den Straßendaten der Basisverbindung (L1) erzeugt, und wobei die Hilfsverbindungsdaten des Entfernungspunktes Attributinformationen und Forminformationen haben, welche von den Straßendaten der Basisverbindung (L1) kopiert sind, die in dem vorgefertigten Straßendatenspeicherabschnitt (24) gespeichert sind,
wobei der Hilfsverbindungsdatenerzeugungsabschnitt (29, S120) die Hilfsverbindungsdaten des Rückkehrpunktes basierend auf Straßendaten einer Hilfsbasisverbindung erzeugt, welche als die andere Entfernungspunkthilfsverbindung (SL2) definiert ist,
wobei die Hilfsverbindungsdaten des Rückkehrpunktes bezogen sind auf
eine Rückkehrpunkthilfsverbindung (SL3), welche ein Ende der Hilfsbasisverbindung (SL2) und den Rückkehrpunkt der existierenden Straße verbindet, und Hilfsendknoten der Rückkehrpunkthilfsverbindung (SL3), und
eine andere Rückkehrpunkthilfsverbindung (SL4), welche den Rückkehrpunkt der existierenden Straße und ein anderes Ende der Hilfsbasisverbindung (SL2) verbindet, und Hilfsendknoten der anderen Rückkehrpunkthilfsverbindung (SL4),
wobei der Hilfsverbindungsdatenerzeugungsabschnitt (29, S120) die Hilfsverbindungsdaten des Rückkehrpunktes durch Kopieren von Daten von den Straßendaten der Hilfsbasisverbindung (SL2) erzeugt und wobei die Hilfsverbindungsdaten des Rückkehrpunktes Attributinformationen und Forminformationen haben, die von den Straßendaten der Hilfsbasisverbindung (SL2) kopiert sind, die in dem Gelernte-Straße-Datenspeicherabschnitt (25) gespeichert sind,
wobei die Navigationsvorrichtung ferner einen Einstellabschnitt (29) umfasst,
wobei, wenn der Hilfsverbindungsdatenerzeugungsabschnitt die Hilfsverbindungsdaten des Rückkehrpunktes erzeugt, der Einstellabschnitt die Attributinformationen der Hilfsbasisverbindungsdaten zum Ungültigerklären der Hilfsbasisverbindungsdaten einstellt.

2. Die Navigationsvorrichtung gemäß Anspruch 1,
wobei die Hilfsendknoten in den Hilfsverbindungsdaten, welche von dem Hilfsverbindungsdatenerzeugungsabschnitt erzeugt werden, die aus Attributinformationen von Endknoten der Basisverbindung herausgezogenen Attributinformationen haben.

3. Die Navigationsvorrichtung gemäß Anspruch 1 oder 2,
wobei die Hilfsverbindung in den Hilfsverbindungsdaten, welche von dem Hilfsverbindungsdatenerzeugungsabschnitt erzeugt werden, die Forminformationen oder die Attributinformationen haben, die aus Forminformationen oder Attributinformationen der Basisverbindung herausgezogen sind.

4. Die Navigationsvorrichtung gemäß einem der Ansprüche 1 bis 3,
wobei, wenn die detektierte gelernte Straße direkt mit einem Verbindungsende der existierenden Straße verbunden ist, der Hilfsverbindungsdatenerzeugungsabschnitt nicht die Hilfsverbindung und die andere Hilfsverbindung basierend auf den Straßendaten der existierenden Straße erzeugt.

5. Die Navigationsvorrichtung gemäß einem der Ansprüche 1 bis 4,
wobei, wenn (i) die detektierte gelernte Straße mit einer existierenden Straße über einen auf der existierenden Straße platzierten Verbindungspunkt verbunden ist und (ii) basierend auf Straßendaten der existierenden Straße erzeugte Hilfsverbindungsdaten schon in dem Gelernte-Straße-Datenspeicherabschnitt als erste Hilfsverbindungsdaten existieren, der Hilfsverbindungsdatenerzeugungsabschnitt zweite Hilfsverbindungsdaten basierend auf Straßendaten einer verbindungsseitigen Hilfsbasisverbindung, die als eine Hilfsverbindung definiert ist, erzeugt, welche in den ersten Hilfsverbindungsdaten enthalten ist und durch den Verbindungspunkt zwischen der existierenden Straße und der detektierten gelernten Straße verläuft,
wobei die zweiten Hilfsverbindungsdaten sich beziehen auf
eine zweite Hilfsverbindung, welche eine Ende der verbindungsseitigen Hilfsbasisverbindung mit dem Verbindungspunkt zwischen der existierenden Straße und der detektierten gelernten Straße verbindet, und Hilfsendknoten der zweiten Hilfsverbindung, und
eine andere zweite Hilfsverbindung, welche den Verbindungspunkt zwischen der existierenden Straße und der detektierten gelernten Straße und ein anderes Ende der verbindungsseitigen Hilfsbasisverbindung verbindet, und Hilfsendknoten der anderen zweiten Hilfsverbindung, und
wobei der Aufzeichnungsabschnitt die Straßendaten der detektierten gelernten Straße und die zweiten Hilfsverbindungsdaten, die in Bezug auf die detektierte gelernte Straße erzeugt werden, in dem Gelernte-Straße-Datenspeicherabschnitt aufzeichnet.

6. Die Navigationsvorrichtung gemäß einem der Ansprüche 1 bis 5, wobei:
der Gelernte-Straße-Detektionsabschnitt ferner
eine schon in dem Gelernte-Straße-Datenspeicherabschnitt gespeicherte gelernte Straße als ein Detektionsziel verwendet, von welchem eine neue gelernte Straße detektiert wird, und
Straßendaten der neuen gelernten Straße basierend auf der Fahrortslinie erzeugt, wenn die Fahrposition des Fahrzeugs sich von der schon in dem Gelernte-Straße-Datenspeicherabschnitt gespeicherten gelernten Straße entfernt oder zu dieser zurückkehrt; und
der Hilfsverbindungsdatenerzeugungsabschnitt Hilfsverbindungsdaten, die der neuen gelernten Straße entsprechen, basierend auf Straßendaten der gelernten Straße, die schon in dem Gelernte-Straße-Datenspeicherabschnitt gespeichert sind, erzeugt, wenn die existierende Straße, die mit der neuen gelernten Straße verbunden ist, der schon in dem Gelernte-Straße-Datenspeicherabschnitt gespeicherten gelernten Straße entspricht.

7. Die Navigationsvorrichtung gemäß einem der Ansprüche 1 bis 6, wobei:
der Einstellabschnitt (29) Attributinformationen, welche eine Gültigkeit oder Ungültigkeit der Straßendaten der gelernten Straße, der Hilfsbasisverbindungsdaten und der Hilfsverbindungsdaten des Rückkehrpunktes definieren, die in dem Gelernte-Straße-Datenspeicherabschnitt (25) gespeichert sind, einstellt.

8. Ein Programmprodukt, welches in einem nicht flüchtigen, computerlesbaren Speichermedium gespeichert ist, das Instruktionen zur Ausführung durch einen Computer umfasst, wobei die Instruktionen ein computerimplementiertes Verfahren für eine Navigationsvorrichtung (1) umfassen, welches eine Zielführung für ein Fahrzeug unter Verwendung von Straßendaten, die Verbindungen und Endknoten der Verbindungen in Bezug auf Straßen angeben, bereitstellt,
die Navigationsvorrichtung umfassend
(i) einen vorgefertigten Straßendatenspeicherabschnitt (24), in welchem existierende Straßendaten in Bezug auf existierende Straßen auf einer vorgefertigten Karte gespeichert sind, und
(ii) einen Gelernte-Straße-Datenspeicherabschnitt (25), in welchem Straßendaten in Bezug auf gelernte Straßen gespeichert sind,
die Instruktionen zum Implementieren:
einen Schritt (S100) eines Detektierens einer neuen gelernten Straße, welche nicht in dem vorgefertigten Straßendatenspeicherabschnitt (24) gespeichert ist, basierend auf einer Fahrortslinie von einem Entfernungspunkt, wo eine Fahrposition des Fahrzeugs sich von einer existierenden Entfernungsverbindung (L1) einer existierenden Entfernungsstraße, die in dem vorgefertigten Straßendatenspeicherabschnitt gespeichert ist, zu einem Rückkehrpunkt, wo die Fahrposition des Fahrzeugs zu einer existierenden Rückkehrverbindung (L2) einer existierenden Rückkehrstraße zurückkehrt, die in dem vorgefertigten Straßendatenspeicherabschnitt gespeichert ist;
einen Schritt (S110) eines Erzeugens von gelernten Straßendaten der neuen gelernten Straße, wobei die gelernten Straßendaten (i) eine gelernte Verbindung (GL1) der neuen gelernten Straße und (ii) erste und zweite gelernte Endknoten (GN1, GN2) der gelernten Verbindung der neuen gelernten Straße angeben;
einen Schritt (S120) eines Definierens sowohl der existierenden Entfernungsverbindung und der existierenden Rückkehrverbindung als eine Basisverbindung (L1, L2), wobei sowohl der Entfernungspunkt als auch der Rückkehrpunkt als einen Verbindungspunkt definiert werden;
einen Schritt (S120) eines Erzeugens, basierend auf Straßendaten in Bezug auf die Basisverbindung (L1, L2), die in dem vorgefertigten Straßendatenspeicherabschnitt (24) gespeichert sind, von Hilfsverbindungsdaten in Bezug auf jeden Verbindungspunkt der Basisverbindung (L1, L2), wobei die Hilfsverbindungsdaten angeben
(i) eine erste Hilfsverbindung (SL1, SL3), welche den jeweiligen Verbindungspunkt mit einem von zwei Endknoten der Basisverbindung (L1, L2) verbindet, und zwei Hilfsendknoten (SN1, SN2, SN5, SN6) der ersten Hilfsverbindung und
(ii) eine zweite Hilfsverbindung (SL2, SL4), welche den jeweiligen Verbindungspunkt mit einem anderen der zwei Endknoten (SN3, SN4, SN7, SN8) der Basisverbindung (L1, L2) verbindet, und zwei Hilfsendknoten der zweiten Hilfsverbindung; und
einen Schritt (S130) eines Aufzeichnens, in Bezug auf die neue gelernte Straße, der gelernten Straßendaten und der Hilfsverbindungsdaten in Assoziation miteinander in dem Gelernte-Straße-Datenspeicherabschnitt (25), **dadurch gekennzeichnet, dass**
in dem Schritt (S100) eines Detektierens der neuen gelernten Straße, wenn sich die detektierte gelernte Straße von der Verbindung der existierenden Straße an dem Entfernungspunkt entfernt und zu derselben Verbindung der existierenden Straße an dem Rückkehrpunkt zurückkehrt, der Hilfsverbindungsdatenerzeugungsabschnitt Hilfsverbindungsdaten des Entfernungspunktes an einer Entfernungspunktseite erzeugt und Hilfsverbindungsdaten des Rückkehrpunktes an einer Rückkehrpunktseite erzeugt,
im Schritt (S120) eines Erzeugens der Hilfsverbindungsdaten die Hilfsverbindungsdaten des Entfernungspunktes basierend auf den Straßendaten der Basisverbindung (L1) erzeugt werden, die als die Verbindung der mit der detektierten gelernten Straße verbundenen existierenden Straße definiert ist,
die Hilfsverbindungsdaten des Entfernungspunktes bezogen sind auf
eine Entfernungspunkthilfsverbindung (SL1), welche ein erstes Ende der Basisverbindung (L1) und den Entfernungspunkt der existierenden Straße verbindet, und Hilfsendknoten der Entfernungspunkthilfsverbindung (SL1), wobei das erste Ende eines von zwei Enden der Basisverbindung (L1) ist und sich mit dem Entfernungspunkt verbindet, ohne dass der Rückkehrpunkt dazwischenkommt,
eine andere Entfernungspunkthilfsverbindung (SL2), welche den Entfernungspunkt der existierenden Straße und ein zweites Ende der Basisverbindung (L1) verbindet, und Hilfsendknoten der anderen Entfernungspunkthilfsverbindung (SL2), wobei das zweite Ende ein anderes der zwei Enden der Basisverbindung (L1) ist und sich mit dem Entfernungspunkt verbindet, wobei der Rückkehrpunkt dazwischenkommt,
im Schritt (S120) eines Erzeugens der Hilfsverbindungsdaten die Hilfsverbindungsdaten des Entfernungspunktes durch Kopieren von Daten von den Straßendaten in Bezug auf die Basisverbindung (L1) erzeugt werden und die Hilfsverbindungsdaten des Entfernungspunktes Attribut- und Forminformationen haben, die von den Straßendaten der Basisverbindung (L1), die in dem vorgefertigten Straßendatenspeicherabschnitt (24) gespeichert sind, kopiert werden,
im Schritt (S120) eines Erzeugens der Hilfsverbindungsdaten die Hilfsverbindungsdaten des Rückkehrpunktes basierend auf Straßendaten einer Hilfsbasisverbindung erzeugt werden, welche als die andere Entfernungspunkthilfsverbindung (SL2) definiert ist,
die Hilfsverbindungsdaten des Rückkehrpunktes bezogen sind auf
eine Rückkehrpunkthilfsverbindung (SL3), welche ein Ende der Hilfsbasisverbindung (SL2) und den Rückkehrpunkt der existierenden Straße verbindet, und Hilfsendknoten der Rückkehrpunkthilfsverbindung (SL3), und
eine andere Rückkehrpunkthilfsverbindung (SL4), welche den Rückkehrpunkt der existierenden Straße und ein anderes Ende der Hilfsbasisverbindung (SL2) verbindet, und Hilfsendknoten der anderen Rückkehrpunkthilfsverbindung,
im Schritt (S120) eines Erzeugens der Hilfsverbindungsdaten die Hilfsverbindungsdaten des Rückkehrpunktes durch Kopieren von Daten von den Straßendaten in Bezug auf die Hilfsbasisverbindung (SL2) erzeugt werden und die Hilfsverbindungsdaten des Rückkehrpunktes Attribut- und Forminformationen haben, die von Straßendaten der Hilfsbasisverbindung (SL2), die in dem Gelernte-Straße-Datenspeicherabschnitt (25) gespeichert sind, kopiert werden,
wobei, wenn die Hilfsverbindungsdaten des Rückkehrpunktes erzeugt werden, die Attributinformationen der Hilfsbasisverbindungsdaten zum Ungültigerklären der Hilfsbasisverbindungsdaten eingestellt werden.

## Revendications

1. Dispositif de navigation (1) pour fournir un guidage d'itinéraire à un véhicule, le dispositif de navigation, comprenant :
une partie de stockage de données routières prêtes à l'emploi (24) qui stocke des données routières de routes existantes dans une carte prête à l'emploi, les données routières des routes existantes étant utilisées dans le guidage routier ;
une partie de stockage de données routières apprises (25) qui est différente de la partie de stockage de données routières prêtes à l'emploi et qui stocke des données routières d'une route apprise, et des données de liaison auxiliaire raccordant une liaison de la route apprise à une liaison d'une route existante, les données routières de la route apprise et les données de liaison auxiliaire étant utilisées dans le guidage routier ;
une section de détection de route apprise (29, S100, S110) qui détecte une nouvelle route en fonction d'un itinéraire de déplacement depuis un point de sortie où une position de marche du véhicule sort d'une route existante stockée dans la partie de stockage de données routières prêtes à l'emploi (24) vers un point de retour où la position de marche du véhicule retourne vers une route existante stockée dans la partie de stockage de données routières prêtes à l'emploi (24), la nouvelle route détectée par la section de détection de route apprise étant qualifiée de route apprise détectée, la section de détection de route apprise générant des données routières relatives à une liaison de la route apprise détectée et des noeuds d'extrémités de la liaison de la route apprise détectée ;
une section de production de données de liaison auxiliaire (29, S120) qui génère des données de liaison auxiliaire en fonction de données routières d'une liaison de base (L1, L2) qui est définie comme une liaison de la route existante raccordée à la route apprise détectée, les données de liaison auxiliaire étant relatives à une liaison auxiliaire, qui raccordent une extrémité de la liaison de base (L1, L2) à un point de raccordement entre une route existante et la route apprise détectée, et des noeuds d'extrémités auxiliaires de la liaison auxiliaire, les données de liaison auxiliaire étant aussi relatives à un autre liaison auxiliaire, qui raccordent une autre extrémité de la liaison de base (L1, L2) au point de raccordement entre la route existante et la route apprise détectée, et des noeuds d'extrémités auxiliaires de l'autre liaison auxiliaire ; et
une section d'enregistrement (29, S130) qui enregistre (i) les données routières de la route apprise détectée produites par la section de détection de route apprise et (ii) les données de liaison auxiliaire produites par rapport à la route apprise détectée par la section de production de données de liaison auxiliaire dans la partie de stockage de données routières apprises (25), **caractérisé en ce que**
lorsque la route apprise détectée sort de la liaison de la route existante par le point de sortie et retourne à la même liaison de la route existante par le point de retour, la section de production de données de liaison auxiliaire produit des données de liaison auxiliaire du point de sortie du côté du point de sortie, et produit des données de liaison auxiliaire du point de retour du côté du point de retour,
dans lequel la section de production de données de liaison auxiliaire (29, S120) produit les données de liaison auxiliaire du point de sortie en fonction de données routières de la liaison de base (L1) qui est définie comme la liaison de la route existante raccordée à la route apprise détectée,
les données de liaison auxiliaire du point de sortie sont relatives à
une liaison auxiliaire du point de sortie (SL1), qui raccorde une première extrémité de la liaison de base (L1) au point de sortie de la route existante, et des noeuds d'extrémités auxiliaires de la liaison auxiliaire du point de sortie (SL1), la première extrémité étant l'une des deux extrémités de la liaison de base (L1) et étant reliée au point de sortie sans intervention du point de retour,
un autre liaison auxiliaire du point de sortie (SL2), qui raccorde le point de sortie de la route existante à une deuxième extrémité de la liaison de base (L1), et des noeuds d'extrémités auxiliaires de l'autre liaison auxiliaire du point de sortie (SL2), la deuxième extrémité étant l'autre des deux extrémités de la liaison de base (L1) et étant reliée au point de sortie avec intervention du point de retour,
dans lequel la section de production de données de liaison auxiliaire (29, S120) produit les données de liaison auxiliaire du point de sortie en copiant des données à partir des données routières de la liaison de base (L1), et dans lequel les données de liaison auxiliaire du point de sortie contiennent des informations d'attribut et des informations de forme copiées à partir des données routières de la liaison de base (L1) stockées dans la partie de stockage de données routières prêtes à l'emploi (24),
dans lequel la section de production de données de liaison auxiliaire (29, S120) produit les données de liaison auxiliaire du point de retour en fonction de données routières d'une liaison de base auxiliaire qui est définie comme étant l'autre liaison auxiliaire du point de sortie (SL2),
les données de liaison auxiliaire du point de retour sont relatives à
une liaison auxiliaire du point de retour (SL3), qui raccorde une extrémité de la liaison de base auxiliaire (SL2) au point de retour de la route existante, et des noeuds d'extrémités auxiliaires de la liaison auxiliaire du point de retour (SL3), et
un autre liaison auxiliaire du point de retour (SL4), qui raccorde le point de retour de la route existante à une autre extrémité de la liaison de base auxiliaire (SL2), et des noeuds d'extrémités auxiliaires de l'autre liaison auxiliaire du point de retour (SL4),
dans lequel la section de production de données de liaison auxiliaire (29, S120) produit les données de liaison auxiliaire du point de retour en copiant des données à partir des données routières de la liaison de base auxiliaire (SL2), et dans lequel les données de liaison auxiliaire du point de retour contiennent des informations d'attribut et des informations de forme copiées à partir des données routières de la liaison de base auxiliaire (SL2) stockées dans la partie de stockage de données routières apprises (25),
dans lequel le dispositif de navigation comprend en outre une section de réglage (29),
dans lequel, lorsque la section de production de données de liaison auxiliaire produit les données de liaison auxiliaire du point de retour, la section de réglage règle les informations d'attribut des données de liaisons de base auxiliaire pour invalider les données de liaison de base auxiliaire.

2. Dispositif de navigation selon la revendication 1,
dans lequel les noeuds d'extrémités auxiliaires dans les données de liaison auxiliaire, produites par la section de production de données de liaison auxiliaire, contiennent des informations d'attribut extraites à partir d'informations d'attribut de noeuds d'extrémités de la liaison de base.

3. Dispositif de navigation selon la revendication 1 ou 2,
dans lequel la liaison auxiliaire dans les données de liaison auxiliaire, produites par la section de production de données de liaison auxiliaire, contient les informations de configuration ou les informations d'attribut extraites à partir d'informations de configuration ou d'informations d'attribut de la liaison de base.

4. Dispositif de navigation selon l'une quelconque des revendications 1 à 3,
dans lequel, lorsque la route apprise détectée est directement raccordée à une extrémité de liaison de la route existante, la section de production de données de liaison auxiliaire ne produit pas la liaison auxiliaire et l'autre liaison auxiliaire en fonction des données routières de la route existante.

5. Dispositif de navigation selon l'une quelconque des revendications 1 à 4,
dans lequel, lorsque (i) la route apprise détectée est raccordée à une route existante par le biais d'un point de raccordement placé sur la route existante et (ii) des données de liaison auxiliaire produites en fonction de données routières d'une route existante existent déjà dans la partie de stockage de données routières apprises comme premières données de liaison auxiliaire, la section de production de données de liaison auxiliaire produit des deuxièmes données de liaison auxiliaire en fonction des données routières d'une liaison de base auxiliaire du côté de raccordement définie comme liaison auxiliaire, étant incluse dans les premières données de liaison auxiliaire et passant par le point de raccordement entre la route existante et la route apprise détectée,
dans lequel les deuxièmes données de liaison auxiliaire sont relatives à
une deuxième liaison auxiliaire, raccordant une extrémité de la liaison de base auxiliaire du côté de raccordement au point de raccordement entre la route existante et la route apprise détectée, et des noeuds d'extrémités auxiliaires de la deuxième liaison auxiliaire, et
une autre deuxième liaison auxiliaire, raccordant le point de raccordement entre la route existante et la route apprise détectée à une autre extrémité de la liaison de base auxiliaire du côté de raccord, et des noeuds d'extrémités auxiliaires de l'autre deuxième liaison auxiliaire, et
dans lequel la section d'enregistrement enregistre les données routières de la route apprise détectée et les données de deuxième liaison auxiliaire produites par rapport à la route apprise détectée dans la partie de stockage de données routières apprises.

6. Dispositif de navigation selon l'une quelconque des revendications 1 à 5, dans lequel :
la section de détection de route apprise comprend en outre
l'utilisation d'une route apprise déjà stockée dans la partie de stockage de données routières apprises comme cible de détection depuis laquelle une nouvelle route apprise est détectée, et
la production de données routières de la nouvelle route apprise en fonction du locus mobile lorsque la position de marche du véhicule sort de ou retourne à la route apprise déjà stockée dans la partie de stockage de données routières apprises ; et
la section de production de données de liaison auxiliaire produit des données de liaison auxiliaire correspondant à la nouvelle route apprise en fonction de données routières de la route apprise déjà stockée dans la partie de stockage de données routières apprises lorsque la route existante raccordée à la nouvelle route apprise correspond à la route apprise déjà stockée dans la partie de stockage de données routières apprises.

7. Dispositif de navigation selon l'une quelconque des revendications 1 à 6, dans lequel :
la section de paramètres (29) paramètre des informations d'attribut définissant la validité ou l'invalidité des données routières de la route apprise, les données de liaison de base auxiliaire et les données de liaison auxiliaire du point de retour stockées dans la partie de stockage de données routières apprises (25).

8. Produit de programme stocké dans un support de stockage non transitoire lisible par ordinateur comprenant des instructions pour une exécution par ordinateur, les instructions comportant un procédé mis en application par un ordinateur pour un dispositif de navigation (1) fournissant un guidage d'itinéraire à un véhicule utilisant des données routières indiquant des liaisons et des noeuds d'extrémités des liaisons relatifs aux routes,
le dispositif de navigation comportant
(i) une partie de stockage de données routières prêtes à l'emploi (24) dans laquelle des données routières existantes relatives à des routes existantes sur une carte prête à l'emploi sont stockées, et
(ii) une partie de stockage de données routières apprises (25) dans laquelle les données routières relatives aux routes apprises sont stockées,
les instructions pour mettre en application :
une étape (S 100) de détection d'une nouvelle route apprise, n'étant pas stockée dans la partie de stockage de données routières prêtes à l'emploi (24), en fonction d'un locus mobile depuis un point de sortie où une position de marche du véhicule sort par une liaison existante de sortie (L1) d'une route existante de sortie stockée dans la partie de stockage de données routières prêtes à l'emploi vers un point de retour où la position de marche du véhicule retourne sur une liaison existante de retour (L2) d'une route existante de retour stockée dans la partie de stockage de données routières prêtes à l'emploi ;
une étape (S110) de production de données routières apprises de la nouvelle route apprise, les données routières apprises indiquant (i) une liaison apprise (GL1) de la nouvelle route apprise et (ii) des premier et deuxième noeuds d'extrémités appris (GN1, GN2) de la liaison apprise de la nouvelle route apprise ;
une étape (S120) de définition de la liaison existante de sortie et de la liaison existante de retour comme liaison de base (L1, L2) tout en définissant le point de sortie et le point de retour comme point de raccordement ;
une étape (S120) de production, en fonction de données routières relatives aux liaisons de base (L1, L2) stockées dans la partie de stockage de données routières prêtes à l'emploi (24), des données de liaison auxiliaire par rapport à chaque point de raccordement de la liaison de base (L1, L2), les données de liaison auxiliaire indiquant
(i) une première liaison auxiliaire (SL1, SL3), raccordant chaque point de raccordement à un ou deux noeuds d'extrémités de la liaison de base (L1, L2), et deux noeuds d'extrémités auxiliaires (SN1, SN2, SN5, SN6) de la première liaison auxiliaire et
(ii) une deuxième liaison auxiliaire (SL2, SL4), raccordant chaque point de raccordement à un autre des deux noeuds d'extrémités (SL3, SL4, SL7, SL8) de la liaison de base (L1, L2), et deux noeuds d'extrémités auxiliaires de la deuxième liaison auxiliaire ; et
une étape (S130) d'enregistrement, par rapport à la nouvelle route apprise, des données routières apprises et des données de liaison auxiliaire associées les unes aux autres dans la partie de stockage de données routières apprises (25), **caractérisé en ce que**
dans l'étape (S100) de détection de la nouvelle route apprise, lorsque la route apprise détectée sort de la liaison de la route existante par le point de sortie et retourne à la même liaison de la route existante par le point de retour, la section de production de données de liaison auxiliaire produit des données de liaison auxiliaire du point de sortie sur le côté du point de sortie, et produit des données de liaison auxiliaire du point de retour sur le côté du point de retour,
dans l'étape (120) de production de données de liaison auxiliaire, les données de liaison auxiliaire du point de sortie sont produites en fonction des données routières de la liaison de base (L1) définie comme liaison de la route existante raccordée à la route apprise détectée,
les données de liaison auxiliaire du point de sortie sont relatives à
une liaison auxiliaire du point de sortie (SL1), raccordant une première extrémité de la liaison de base (L1) au point de sortie de la route existante, et des noeuds d'extrémités auxiliaires de la liaison auxiliaire du point de sortie (SL1), la première extrémité étant l'une des deux extrémités de la liaison de base (L1) et étant reliée au point de sortie sans intervention du point de retour,
un autre liaison auxiliaire du point de sortie (SL2), raccordant le point de sortie de la route existante à une deuxième extrémité de la liaison de base (L1), et des noeuds d'extrémités auxiliaires de l'autre liaison auxiliaire du point de sortie (SL2), la deuxième extrémité étant l'autre des deux extrémités de la liaison de base (L1) et étant reliée au point de sortie avec intervention du point de retour,
dans l'étape (120) de production de données de liaison auxiliaire, les données de liaison auxiliaire du point de sortie sont produites en copiant des données à partir des données routières relatives à la liaison de base (L1), et les données de liaison auxiliaire du point de sortie contiennent des informations d'attribut et de configuration copiées depuis les données routières de la liaison de base (L1) stockées dans la partie de stockage de données routières prêtes à l'emploi (24),
dans l'étape (120) de production des données de liaison auxiliaire, les données de liaison auxiliaire du point de retour sont produites en fonction de données routières d'une liaison de base auxiliaire définie comme étant l'autre liaison auxiliaire du point de sortie (SL2),
les données de liaison auxiliaire du point de retour sont relatives à
une liaison auxiliaire du point de retour (SL3), raccordant une extrémité de la liaison de base auxiliaire (SL2) au point de retour de la route existante, et des noeuds d'extrémités auxiliaires de la liaison auxiliaire du point de retour (SL3), et
un autre liaison auxiliaire du point de retour (SL4), raccordant le point de retour de la route existante à une autre extrémité de la liaison de base auxiliaire (SL2), et des noeuds d'extrémités auxiliaires de l'autre liaison auxiliaire du point de retour (L4),
dans l'étape (120) de production des données de liaison auxiliaire, les données de liaison auxiliaire du point de retour sont produites en copiant des données à partir des données routières relatives à la liaison de base auxiliaire (SL2), et les données de liaison auxiliaire du point de retour contiennent des informations d'attribut et de configuration copiées à partir des données routières de la liaison de base auxiliaire (SL2) stockées dans la partie de stockage de données routières apprises (25),
dans lequel, lorsque les données de liaison auxiliaire du point de retour sont produites, les informations d'attribut des données de liaisons de base auxiliaire sont paramétrées pour invalider les données de liaison de base auxiliaire.
